(19) Europäisches Patentamt
European Patent Office
Office européen des brevets

(11) **EP 4 336 145 A1**

(12) **EUROPEAN PATENT APPLICATION**

(43) Date of publication:
**13.03.2024 Bulletin 2024/11**

(21) Application number: **22194711.2**

(22) Date of filing: **08.09.2022**

(51) International Patent Classification (IPC):
**G01C 21/16** (2006.01)   **G01C 21/30** (2006.01)
**G01S 19/38** (2010.01)   **G01S 19/47** (2010.01)
**G01C 25/00** (2006.01)

(52) Cooperative Patent Classification (CPC):
**G01C 21/165; G01C 21/30; G01C 25/005;
G01S 19/38; G01S 19/47**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Septentrio N.V.
3001 Leuven (BE)**

(72) Inventors:
• **NAZEMZADEH, Payam
  5036 SL Tilburg (NL)**
• **VOLCKAERT, Marnix
  3000 Leuven (BE)**

(74) Representative: **AWA Benelux
AWA Benelux SA
Tour & Taxis - Royal Depot box:216
Havenlaan 86c Avenue du Port
1000 Bruxelles (BE)**

(54) **METHOD AND SYSTEM FOR DETERMINING INITIAL HEADING ANGLE**

(57)     Method of determining a heading angle of a mobile body, comprising determining an initial position of the mobile body and defining a plurality of different initial heading angles and a plurality of instances of the mobile body. Each of the plurality of instances is associated with one of the plurality of initial heading angles and with the initial position. The mobile body is moved and inertial navigation data associated with the mobile body is collected. A position of each of the plurality of instances is determined based on the inertial navigation data. An absolute position measurement is performed to determine an absolute position of the mobile body. The absolute position is compared with the position of each of the plurality of instances to find a best-fit instance of the plurality of instances that best fits the absolute position. The heading angle of the mobile body is determined based on a heading angle associated with the best-fit instance. A navigation system is configured to carry out the above method.

FIG 4

**Description**

**Technical field**

The present invention is related to navigation methods and systems, particularly to methods and systems that determine navigation data by fusion of absolute navigation system data and inertial navigation system data.

**Background art**

The benefits of integrating global satellite navigation systems (GNSS) with inertial navigation systems (INS) have been shown in the literature. GNSS and INS behave complimentary to each other to provide smooth and drift-free positioning of mobile bodies, such as vehicles and robots. The basic principle of an INS is to accurately measure the relative motion (acceleration and angular rate) using an inertial measurement unit (IMU) and to periodically integrate this measurement with an absolute position measurement, for example, from a GNSS antenna and a receiver. Since INS provides relative motion information instead of absolute values, the initial position and orientation of the IMU, or more generally of the mobile body in which the IMU is installed, need to be known. In a GNSS/INS integrated system, the initial position is simply provided by the GNSS. Determination of the initial orientation is referred to as alignment. The vehicle orientation in a three-dimensional space includes three parameters, namely roll, pitch, and heading, where heading relates to orientation in a plane perpendicular to gravity (i.e., local level frame). A common approach to determine the initial pitch and roll of the vehicle is to use the measurement of the gravitational acceleration while being static. However, this approach cannot be used to determine the initial heading angle since the gravity vector is perpendicular to the local level frame and hence, in the static mode, the accelerometer will measure same values regardless of the heading angle.

The problem of heading alignment in INS navigation has been addressed in Gade Kenneth, "The seven ways to find heading" The Journal of Navigation 69.5 (2016): 955-970. One well-known approach to solve the problem is to use multiple antennas (usually two) in the GNSS and estimate the orientation of the antenna baseline vector from double differenced phase measurements. However, installation of two antennas is not cost-efficient and moreover, not always practical and/or feasible. Another approach is to use sensors measuring the magnetic fields. Magnetometers can measure the direction of the magnetic north and hence, provide the absolute value of the heading in the global frame with respect to the true north. However, such sensors suffer from the interference and distortion generated by the environment and the electronic payload within the vehicle. Besides, the rapid change in the earth magnetic field results in the requirement for recalibration of the magnetometers after a few years. High-performance gyrocompasses have been shown to provide accurate heading measurement with respect to the earth's rotational axis. However, their significantly high cost, size, and weight make them only useful for such applications as commercial aircraft and military vehicles. Rothmaier Fabian, et al., "Single GNSS antenna heading estimation", Proceedings of the 32nd International Technical Meeting of the Satellite Division of The Institute of Navigation (ION GNSS+ 2019), 2019 discloses to determine heading based on a dual-polarized antenna which is a single antenna including two elements. Two Kalman Filter algorithms are used to fuse the bearing measurements of the dual-polarized antenna with heading rate measurements from a rate gyro for heading estimation. to provide an accurate estimation of heading. However, the polarized antennas are not available off-the-shelf and hence, used only in research.

Summary

It is therefore desirable to provide solutions to determine initial orientation of a mobile body, particularly to determine initial heading angle, which do not require additional sensors or hardware to be installed in a GNSS/INS integrated system. It is desirable to provide such systems which are hence more economical yet providing acceptable or even improved accuracy. It is further desirable to provide such systems which have an acceptable computational intensity and can determine initial orientation fast and reliably.

According to a first aspect of the present disclosure, there is therefore provided a method of determining the (initial) heading angle of a mobile body, as set out in the appended claims. In a first step, a method of determining a(n initial) heading angle of a mobile body comprises determining an initial position of the mobile body. The initial position can comprise an absolute position, such as GNSS position coordinates and can further comprise initial roll and/or pitch values. The absolute position is advantageously utilized to define (an origin of) a local level frame.

In a second step, a plurality of different initial heading angles and a plurality of instances of the mobile body are defined. The plurality of initial heading angles may be defined randomly or uniformly distributed over a predefined range of angles, particularly over a complete 360° range. Each of the plurality of instances are associated with a different one of the plurality of initial heading angles. Each of the plurality of instances shares the same initial position.

In a third step, the mobile body is moved and inertial navigation data associated with the mobile body is collected, advantageously at a first sampling rate. The inertial navigation data can comprise or consist of linear acceleration according to one, two or three degrees of freedom and/or angular velocity according to one, two or three degrees of freedom. A position of each of the plurality of instances is updated based on the inertial navigation data collected, e.g. at the first sampling rate. Advantageously, the position is updated based exclusively on the collected inertial navigation data, such as by updating a state vector of each of the plurality of virtual instances on the basis of linear acceleration and/or angular velocity collected. Advantageously, the position of each of the plurality of instances is updated without relying on absolute position measurements. The state vector can comprise position states with respect to one, two or three degrees of freedom and can further comprise attitude states with respect to one, two or three degrees of freedom, particularly comprising a heading state. One or more of the attitude states may be omitted if prior knowledge of the motion of the mobile body is available, e.g. where heading, roll or pitch are physically constrained to move with a constant, possibly unknown, value (angle).

In a fourth step, an absolute position measurement is performed to determine an absolute position of the mobile body, advantageously at a second sampling rate, which typically is lower than the first sampling rate.

In a fifth step, the absolute position is compared with the position of each of the plurality of instances to find a best-fit instance of the plurality of instances that best fits the absolute position. The fifth step can be carried out at an end of an alignment or initialization period, which may span multiple samples of the third and the fourth steps. The fifth step may be carried out multiple times during the alignment period.

As a result of the fifth step, the heading angle associated with the best-fit instance is selected as the heading angle of the mobile body. In some examples, the heading angles of the instances are updated in the third step, based on the inertial navigation data collected. In this case, the current (last determined) heading angle of the best-fit instance can be selected as the (current) heading angle of the mobile body. Alternatively, a (weighted) average of all or of a subset of the heading angles determined in respect of the best-fit instance can be selected as the heading angle of the mobile body. It is yet alternatively possible to maintain the initial heading of each instance fixed during the alignment or initialization procedure. The latter may be useful in cases in which the mobile body is initially moved with fixed heading.

By defining a plurality of (virtual) instances and associating random/arbitrary initial heading values to the instances, these instances can be propagated during an initial motion of the mobile body by simple inertial navigation. The position of these (propagated) instances can be compared to one or more absolute position measurements of the mobile body to find the best-fit instance and hence making a best guess of the initial heading of the mobile body without requiring expensive hardware. As a result, an easy, economical yet accurate method to perform an initial alignment of a mobile body is obtained. Furthermore, the computation efforts for determining the position of the virtual instances can be kept within reasonable limits by relying solely on data collected from an inertial navigation system, i.e. only acceleration and angular rate (velocity). Hence, advantageously, the virtual instances are propagated without taking absolute position measurements into account, thereby simplifying the navigation equations, and e.g. enabling the possibility of using open-loop (strapdown) navigation equations. Meanwhile, absolute position measurements of the mobile body are collected and afterwards, the absolute position measurements are compared to the calculated position of the virtual instances, to find a best-fit. Typically, the best-fit is the virtual instance associated with an initial heading value closest to the real heading of the mobile body.

According to a second aspect of the present disclosure, there is provided a method of performing navigation of a mobile body, as set out in the appended claims. A navigation algorithm is advantageously initialized with at least the heading angle of the mobile body as determined in the first aspect. While a motion trajectory of the mobile body is performed, inertial navigation data associated with the mobile body is further collected and absolute position measurement is further performed to determine a further absolute position of the mobile body. The further collected inertial navigation data and the further absolute position is fed to the navigation algorithm, which advantageously fuses both data streams as known in the art.

According to a third aspect of the present disclosure, there is provided a navigation system, as set out in the appended claims. The navigation system comprises an inertial navigation module, an absolute position measurement module and a processing module coupled to the inertial navigation module and to the absolute position measurement module. The inertial navigation module, the absolute position measurement module and possibly the processing module may be mounted at fixed position relative to one another, such as on a same support plate. The processing module is advantageously configured to carry out the method according to the first aspect and/or the second aspect.

According to a fourth aspect of the present disclosure, there is provided a mobile body, such as a vehicle or a mobile robot, that incorporates the navigation system of the third aspect and as described herein.

**Brief** description of the figures

Aspects of the invention will now be described in more detail with reference to the appended drawings, wherein same reference numerals illustrate same features and wherein:

Figure 1 represents a diagram of a mobile body according to the present disclosure and related axes, in which the mobile body is represented in top view and the body $Z_b$-axis is pointing downwards in a right-handed frame, in an example with the mobile body $Z_b$-axis being parallel (but opposite) to the local level Z-axis;

Figure 2 represents a flow chart of a method for determining initial heading value according to the present disclosure;

Figure 3 represents a diagram of the mobile body of Fig. 1 and a motion trajectory that it executes with the black dots representing absolute position measurements;

Figure 4 represents a diagram of the mobile body and the motion trajectory of Fig. 3, onto which are added the trajectories of the virtual instances computed based on their initial heading values.

Detailed Description

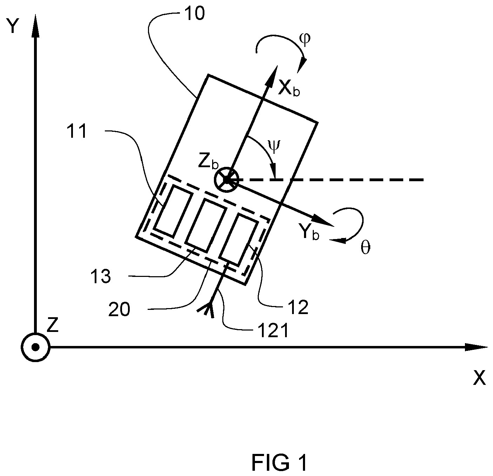

Referring to Fig. 1, a mobile body 10 is moving in a first coordinate system <X,Y,Z> moving with the Earth, defined as a local level frame, where Z is perpendicular to XY and is parallel to the gravity vector. A second coordinate system <$X_b$,$Y_b$,$Z_b$> can be affixed to the mobile body 10 and is referred to as body frame. The body frame has longitudinal axis $X_b$ generally aligned with an axis from back to front of the mobile body 10, a transverse axis $Y_b$ generally aligned with an axis from left side to right side of the mobile body 10 and an elevation axis $Z_b$ perpendicular to the $X_bY_b$-plane to complete a right-handed frame. The position of the mobile body 10 relative to the coordinate system <X,Y,Z> can be defined by the position (e.g. Cartesian coordinates) of the (mass or geometric) centre / origin (or any other fixed point) of the body frame. The attitude of the mobile body 10 can be defined by successive rotations around the body axes to describe a given orientation of the body with respect to a 'zero' orientation in which all rotation angles are set to zero. This zero orientation can be defined arbitrarily with respect to the local level frame and there is no requirement that in the zero orientation the body frame is aligned with the local level frame. In the exemplary Fig. 1, in which the local level frame is defined Z up compared to the sheet of the drawing, and the body frame Z down, the zero orientation aligns the mobile body $X_b$-axis with the positive local level Y-axis, the body $Y_b$-axis with the positive local level X-axis, and the body $Z_b$-axis with the negative local level Z-axis. With respect to this, any orientation of the mobile body can be described by the following three rotations: first a rotation over the heading angle $\psi$ around the body $Z_b$-axis, then a rotation over the pitch angle $\theta$ around the new body $Y_b$-axis, finally a rotation over the roll angle $\varphi$ around the new body $X_b$-axis. All rotations are defined right handed. Hence, the heading angle $\psi$ refers to the angle between a projection of the mobile body $X_b$-axis on the local level XY-plane and the local level X-axis, in which a positive sign is dictated by the right-hand rule, as shown in Fig. 1. If the mobile body further has rotation degrees of freedom about the body $X_b$ and/or $Y_b$ axes, the pitch angle $\theta$ and/or the roll angle $\varphi$ should be considered as additional attitude states. In the contrary case, the roll and pitch angles can be considered to be zero. Particularly, the pitch angle $\theta$ refers to the angle between the mobile body $X_b$-axis and the local level XY-plane. The roll angle $\varphi$ refers to the angle between the mobile body $Y_b$-axis and the local level XY-plane.

The mobile body 10 comprises a navigation system 20. The navigation system 20 comprises an inertial measurement unit (IMU) 11, an absolute position measurement unit (APMU) 12 and a processing unit 13 which is coupled to both the IMU 11 and the APMU 12 for data communication. The IMU 11 is configured to determine linear acceleration and/or angular (rotational) rate of the mobile body 10 and typically comprises an accelerometer configured to measure linear acceleration along one, two, or possibly three (translational) degrees of freedom, such as along axes $X_b$, $Y_b$, $Z_b$ and/or a gyroscope configured to measure rotational position difference and/or rotational velocity about one, two or possibly three axes, such as about axes $X_b$, $Y_b$, $Z_b$. The IMU 11 can be a strapdown system as known in the art, advantageously providing sufficient accuracy at low cost. Other types of inertial navigation systems (INS) can alternatively be contemplated.

The IMU 11 however is not capable to determine the initial (absolute) position of the body frame <$X_b$,$Y_b$,$Z_b$>. This will be the task of the APMU 12. The APMU 12 is configured to determine an absolute position of the mobile body (e.g. relative to an Earth centered, Earth fixed (ECEF) frame), particularly to set the origin of the local level frame, which may be fixed or moving with respect to the ECEF frame. The APMU 12 can e.g. be a GNSS (Global Navigation Satellite System) measurement unit, comprising a GNSS receiver coupled to a GNSS antenna. In some examples of the present disclosure, the APMU 12 can be a GNSS receiver system operating with a single GNSS antenna 121. Other configurations for the APMU 12 are however possible. By way of example, the APMU 12 can comprise a receiver and/or transmitter for performing time-of-flight (ToF) measurements of signals transmitted between the APMU 12 and a plurality of beacons with known position. The position of the APMU 12, and by extension, of the mobile body 10 can be determined by triangulation. One task of the APMU in typical navigation systems is to supplement and/or correct IMU data.

The processing unit 13 is configured to collect measurement data from IMU 11 and APMU 12 and to determine position and attitude (e.g., orientation) of the mobile body 10 relative to the local level frame. Typically, the IMU 11 and the APMU 12 will supply measurement data at different sampling rates. The processing unit 13 can implement a fusion filter, as known in the art, configured to combine the data received from IMU 11 and the data received from APMU 12 to obtain navigation data. The navigation system 20 can be provided on a single support plate mounted on the mobile body 10.

Some mobile bodies, e.g., road cars and fixed-wing aircrafts are configured to move tangential to a single body axis, typically the body's $X_b$ or longitudinal body axis. In these vehicles, the heading angle $\psi$ is related to the direction of motion, and hence, one or more acceptable guesses of the initial heading angle can be derived from the course over the ground while the vehicle is moving. This approach cannot be used for mobile bodies whose longitudinal body axis does not point in the direction of the velocity vector, such as in multi-rotor drones, holonomic mobile robots, tanks, boats, excavators and drift cars. In these vehicles, there is no specific relationship between the direction of motion and the direction where the body frame points to. Providing accurate heading alignment is challenging in such systems, specifically when using a single antenna GNSS unit integrated with an INS. Hence, many of the current products on the market suggest controlling the vehicle in order to start moving tangential to the forward direction of one of the vehicle's body axes with sufficiently large acceleration, then repeat the same process in the backward direction. This is however not always practical. Another method is to have sufficient dynamic variations at the beginning, like an 8-shape trajectory, to let the fusion filter converge to the true heading value. This needs very accurate knowledge of the system to design appropriate sensor fusion that ensures converging from a fully unknown initial heading. Even in that situation, the system will require a long time, sometimes in order of a few minutes, to converge to an accurate heading estimation which is not acceptable in many applications.

According to the present disclosure, a simple technique with an acceptable computational cost is provided to obtain an initial estimation of the heading angle fast, possibly even within a few seconds. Besides the initial heading estimation, an associated error and uncertainty level can additionally be computed easily to assure convergence and significantly reduce convergence time, from a few minutes to the order of 10-30 seconds.

The concept behind methods according to the present disclosure to determine the initial heading is to define a set of virtual instances of the mobile body 10. Each instance starts from the same, known position, and pitch and roll angles (if applicable), but with an initial heading angle which is different from the heading angles of the other instances. Hence, since the true initial heading value of the mobile object 10 is unknown, a set of different initial heading angles is selected, which may be randomly or uniformly distributed over one or more angular orientation ranges, e.g. between 0° and 360° - or any other range if some prior knowledge of the body's initial orientation is available. A virtual instance of the mobile body is defined for each of the different heading values that are defined. In fact, initially, instead of navigating only one "real" body, present methods include an array of virtual mobile bodies navigating from a same initial point and moving in different (initial) directions defined by the initial heading angles assigned to each of them. Each virtual instance is then propagated by a navigator algorithm advantageously relying only on the IMU measurements. As will be discussed, the navigator algorithm can further be simplified for this purpose and e.g. a simplified strapdown navigator algorithm may suffice.

When an absolute position measurement of the mobile body is available, the correspondence between the propagated position of the virtual instances and the measured absolute position will in general be greatest for the virtual instance associated with the initial heading estimate closest to the true initial heading. The correspondence can be evaluated at one or advantageously multiple epochs of the absolute position measurement, which will then lead to a 'winning' virtual instance with a heading estimate sufficiently close to the true heading. The states of the winning virtual instance can then be used as the initial state of the navigation algorithm, e.g. as implemented in the processing unit 13. This allows for a reliable guess of the initial heading angle which results in faster and more reliable convergence of the attitude states in any fusion filter between inertial navigation data and absolute position measurement, such as a GNSS-INS fusion filter.

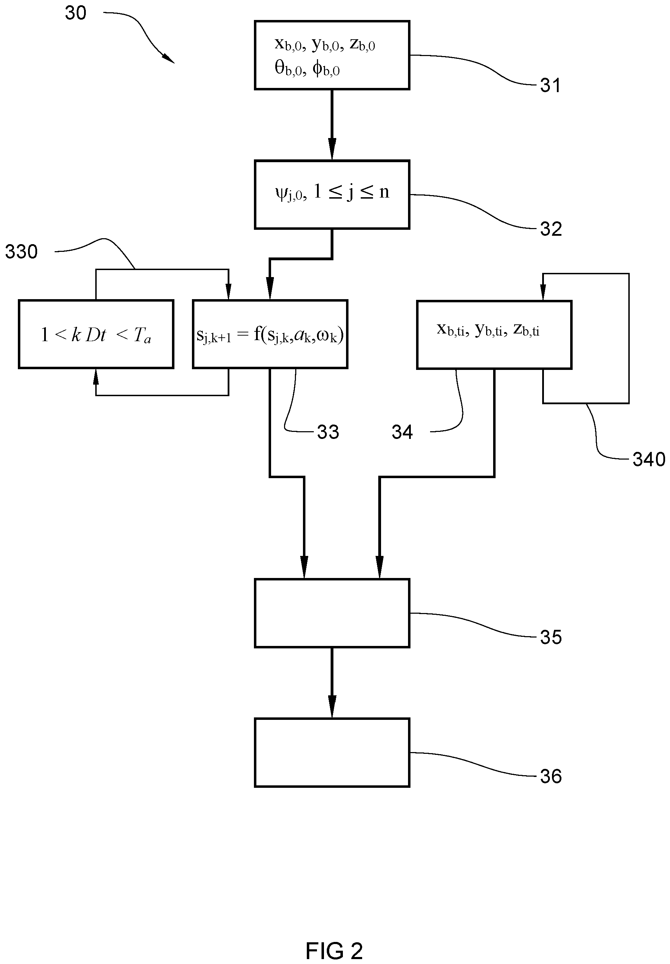

Referring to Fig. 2, a method 30 of determining initial heading of a mobile body according to the present disclosure may start at a first operation 31 in which an initial absolute position measurement is performed, e.g. through the APMU 12, to measure initial absolute body position $x_{b,0}, y_{b,0}, x_{b,0}$ and possibly set the origin of the local level frame. Possibly, initial pitch and roll values, i.e. $\theta_{b,0}, \phi_{b,0}$ respectively are determined as well, e.g. through the IMU 11. To do this, in some examples, the mobile body 10 is kept static for a short time (just a few seconds may suffice). Optionally, the variance of the noise associated to pitch and roll states, $\sigma_\theta^2, \sigma_\phi^2$ respectively, is estimated.

In operation 32, a set of $n$ virtual instances of the mobile body 10 are defined and each is initialized with the measured initial body position $x_{b,0}, y_{b,0}, z_{b,0}$, the initial pitch and roll values $\theta_{b,0}, \phi_{b,0}$ if available and a dedicated initial heading for each virtual instance j, $\{\psi_{j,0}, 1 \leq j \leq n\}$. A different initial heading $\psi_{j,0}$ is assigned to each of the various virtual instances. The initial heading value can be set to vary uniformly over the instances, e.g. selecting $\psi_{j,0}$ in fixed incremental steps from 0° to 360° (0 to $2\pi$ radians) gives $\psi_{j,0} = (j-1) * \dfrac{360°}{n}$. By way of example, if $n = 12$ then $\psi_{1,0} = 0°$, $\psi_{2,0} = 30°$, $\psi_{3,0} = 60°$, etc. As a result, an initial state vector $s_{j,0}$ can be defined for each virtual instance j according to Eq. 1:

$$\boldsymbol{s}_{j,0} = \begin{bmatrix} x_{j,0} \\ y_{j,0} \\ z_{j,0} \\ \phi_{j,0} \\ \theta_{j,0} \\ \psi_{j,0} \end{bmatrix} = \begin{bmatrix} x_{b,0} \\ y_{b,0} \\ z_{b,0} \\ \phi_{b,0} \\ \theta_{b,0} \\ (j-1) * \frac{2\pi}{n} \end{bmatrix} \qquad \text{(Eq. 1),}$$

with $1 \le j \le n$. It will be appreciated that it is not required to vary the initial heading value uniformly over the virtual instances. The initial heading $\psi_{j,0}$ can alternatively be selected randomly, or pre-knowledge of the system may be used to select specific values for $\psi_{j,0}$, e.g. when motion is only possible along one or more discrete axes, or when motion is only possible within a defined circle sector, e.g. from - 30° to + 30°. The selected number $n$ of virtual instances can have an impact on the accuracy of the initial heading determined by the present method and can influence the convergence time. It will further be appreciated that the state vector does not need to comprise pitch and roll values as these may be optional, depending on the type of motion (e.g. only 2D motion).

In operation 33, the mobile body 10 is set in motion. According to methods of the present disclosure, there is advantageously no limitation to the initial trajectory that the mobile body has to perform. The initial trajectory can be any appropriate trajectory and furthermore does not need to be aligned with the body frame. Furthermore, the mobile body does not need to follow any specific dynamic requirements in the alignment process to determine the initial heading.

As the mobile body leaves the initial position $x_{b,0}, y_{b,0}, z_{b,0}$, measurement data is fetched from the IMU 11, e.g. at one or more consecutive IMU sampling times. The IMU measurement data is representative of relative motion, e.g. with respect to a previously determined position, and can consist of (linear) acceleration $\boldsymbol{a}_k$ and/or angular rate $\omega_k$, at least in respect of the $X_b Y_b$-plane, for each sample $k$. The IMU measurement data ($\boldsymbol{a}_k, \omega_k$) is processed by the processing unit 13 to compute an update for the state vector:

$$\boldsymbol{s}_{j,k+1} = f(\boldsymbol{s}_{j,k}, \boldsymbol{a}_k, \boldsymbol{\omega}_k) \qquad \text{(Eq. 2).}$$

The state vector can be updated based on Eq. 2 multiple times, e.g. at multiple samples $k$ of the IMU 12. This is represented by the loop 330 in Fig. 2 in which $Dt$ represents the discretization time for the IMU 12 (i.e., the time interval between two consecutive samples $k$). To this end, an alignment period $T_a$ can be defined during which the state vector is updated, advantageously based solely on IMU measurement data. Particularly, no absolute position measurement data is taken into account for updating the state vector in Eq. 2. The state vector is updated at every sample $k$ in respect of each of the virtual instances $j$.

The update of the state vector is advantageously performed utilizing equations of a strapdown navigator algorithm. Modern strapdown navigators utilize a variety of states to make the optimal estimation of position and orientation. States such as position, orientation, velocity, accelerometer bias, and gyroscope bias are very common to be used in the mathematics of a strapdown navigator. This results in large state vectors with at least 15 states. The math equations of such a system and its corresponding covariance propagation require some computational power. To be able to run multiple strapdown navigators in parallel, one for each virtual instance, at an acceptable computational effort, a simplified strapdown navigator is advantageously utilized. Such a simplified strapdown navigator is advantageously an open-loop navigator which does not integrate the APMU data in its computations of the state vectors, i.e. no fusion filter is utilized. Furthermore, augmented states such as bias and scaling states are advantageously not utilized, thereby decreasing the size of each strapdown navigator.

Advantageously, in operation 33, such as when a simplified strapdown navigator algorithm as mentioned above is implemented, a reduced covariance matrix is utilized. Since only the uncertainty on the attitude estimation is of interest, the covariance matrix states of only the attitude states are propagated through the samples. When all three attitude states are utilized, i.e. pitch, roll and heading states, the reduced covariance matrix is only a 3 x 3 matrix. If pitch and roll are physically constrained to be fixed values, the reduced covariance matrix will be a $1 \times 1$ matrix. On the other hand, it is possible to initialize the pitch and roll values to a predetermined initial value, e.g. to zero. In the latter case, the pitch and roll are advantageously retained in the reduced covariance matrix.

A strapdown navigator generally has a dependence on the position on the Earth, for the definition of the local level frame. Advantageously, the effect of the position differences of the various virtual instances is neglected throughout the alignment procedure, i.e., each virtual instance shares the same local level frame position, at least at some and possibly all sample times. By so doing, computations related to the definition of the local level frame are only required to be executed once and apply to all virtual instances. As a result, only a single covariance matrix can be propagated for all the virtual instances, which further reduces the computation effort.

In operation 34, new measurement data is fetched from the APMU 12. The APMU data is representative of an absolute position $x_{b,ti}, y_{b,ti}, z_{b,ti}$ of the mobile body at epoch $t_i$, $1 \leq i \leq m$. Operation 34 can be carried out at one or multiple epochs 1 to $m$ during the alignment procedure (e.g. while loop 330 is run). Multiple determination of the absolute position is represented by the loop 340 in Fig. 2. For each epoch $t_i$ the processing unit 13 processes the APMU data to determine the new absolute position $x_{b,ti}, y_{b,ti}, z_{b,ti}$.

Generally, the APMU 12 will have a lower sampling rate compared to the IMU 11 and the time instants of epochs $t_i$ will typically not coincide with the time instants of the samples $k$ of the IMU 11. Both the APMU data and the IMU data can however be processed separately for purposes of determining the initial heading, e.g. in operations 33 and 34.

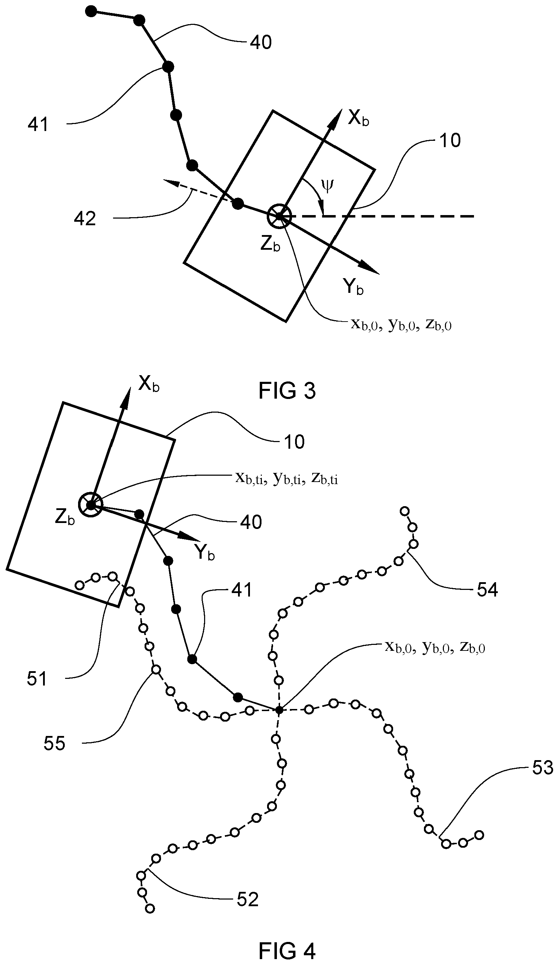

Figs. 3 and 4 illustrate the process of operations 33 and 34 in an example in which the initial direction of motion represented by arrow 42 is different from the longitudinal body axis $X_b$. When the mobile body 10 is set in motion, the trajectory of motion 40 is determined by measurement of the absolute position at one or multiple epochs $t_i$ represented by the black dots 41 along trajectory 40. This is performed in operation 34 by the APMU of mobile body 10 (the APMU is not shown in Figs. 3 and 4 for purposes of clarity). Simultaneously, operation 33 is performed for each of the virtual instances of mobile body 10 that have been defined in operation 32. In Fig. 4, this is depicted for four virtual instances with equal initial position, pitch, and roll values and different heading values. The four initial heading values $\psi_{j,0}$ are selected uniformly over 360°, so they differ a multiple of 90° from one another. Hence, based solely on the IMU data and starting from the initial state (heading value) assigned to each virtual instance, trajectories 51-54 are determined by updating the state vectors in respect of each virtual instance based on Eq. 1 and Eq. 2 at each sample $k$. Each updated state vector is represented by the white dots 55 along each trajectory 51-54. Since the trajectories 51-54 do not rely on further absolute position measurement - apart from the initial position measurement of operation 31 - these trajectories will generally deviate from the actual motion trajectory 40 and may be highly dependent on the initial heading value assigned to it. It will be appreciated that the noise relating to absolute position measurement is neglected in Figs. 3 and 4 for illustration purposes.

With continued reference to Fig. 2 and Fig. 4, in operation 35, the trajectories 51-54 based exclusively on IMU measurements are compared with the trajectory 40 based exclusively on APMU measurement to find a best fit. For selecting the best fit, a variety of methods as known in the art can be utilized, such as least square errors, maximum likelihood or minimum Euclidean distance between the virtual instance position(s) 55 and the APMU measurement position(s) 41. Depending on the method utilized to find the best fit, a comparison can be made at multiple epochs, i.e. for multiple positions 41, or at a single epoch. By way of example, a maximum likelihood algorithm requires a comparison on multiple epochs, while minimum Euclidean distance is performed on a single epoch, e.g. the instance with state vector closest to the APMU states is considered as the best-fit.

The time period over which the IMU trajectories 51-54 are computed, i.e. over which the state matrices of the various virtual instances are updated in operation 33, is referred to as the alignment period $T_a$, which can be predefined or dynamic. The alignment period $T_a$ is generally independent of the discretization time but can depend on the dynamics of the mobile body and amount of sensor noise. If $T_a$ is selected too small, the amount of motion may not be sufficient to observe significant position difference between the virtual instances (trajectories 51-54). On the other hand, if it is selected too large, the position and attitude drift in the strapdown navigators will become noticeably large which may result in the wrong selection of the best-fit instance. Typically, the duration at which the body is moved for a preset distance, e.g., 5-10 meters, can be used to select proper $T_a$. It is possible to set $T_a$ dynamically, e.g. to continue the operations 33 and 34 and hence to continue computing the trajectories 40 and 51-54 as long as an alignment error computed in operation 35 exceeds a predefined threshold.

In operation 36, a normal navigation procedure is initialized with the current APMU values $x_{b,ti}, y_{b,ti}, z_{b,ti}$ (i.e., of the last epoch of trajectory 40) obtained with operation 34 and the attitude value(s) $\theta_b, \phi_b, \psi_b$ derived from the best-fit instance determined with operation 35. Various possibilities can be contemplated to select proper attitude value(s) from the best-fit instance for initializing the normal navigation procedure. In some examples, the current (as computed from the last sample) attitude value(s) $\theta_{b,k}, \phi_{b,k}, \psi_{b,k}$ of the best-fit instance determined with operation 35 can be utilized for initializing the navigation algorithm in operation 36. Alternatively, a weighted average attitude value is computed, either from all the samples of operation 33, or only a subset thereof, and this weighted average value utilized to initialize normal navigation in operation 36. Yet alternatively, the initial heading value associated with the best-fit instance is utilized. The normal navigation procedure is performed by navigation system 20 based on the initialized values, and can include a fusion or integration of IMU (attitude) data and APMU (position) data as known in the art.

In such a navigation initialization process, not only the initialized state values (position and attitude) but also the initial state covariance matrix is usually needed. Since only the attitude states are initialized from the alignment period results, it will be convenient to compute only attitude propagated inertial noise. The propagated inertial noise associated with attitude states can be estimated on the basis of the alignment period $T_a$ in operation 33. If the noise value of the IMU measurements associated with the attitude states of the simplified strapdown navigator is $\Omega(\alpha_k, \omega_k)$, the propagated covariance at every IMU sample k can be written as:

$$Q_{k+1} = Q_k + \Omega(\boldsymbol{a}_k, \boldsymbol{\omega}_k) \qquad \text{(Eq. 3)},$$

Where $Q$ should be initialized as:

$$Q_0 = \begin{bmatrix} \sigma_\phi^2 & 0 & 0 \\ 0 & \sigma_\theta^2 & 0 \\ 0 & 0 & \sigma_\psi^2 \end{bmatrix} \qquad \text{(Eq. 4)}.$$

$\sigma_\phi^2$, $\sigma_\theta^2$ are the variance of roll and pitch states in the beginning of the alignment period as computed at operation 31.

$\sigma_\psi^2$ is the variance of the heading in the beginning of the alignment period and can be selected based on the interval between the various initial heading values assigned to the different virtual instances, e.g. the larger the number of virtual instances, the smaller the variance.

The state covariance matrix is advantageously equal for all strapdown navigators since the uncertainty on the heading does not depend on the heading estimate itself. By propagating this state covariance, the covariance elements of the attitude states can easily be set once the best-fit instance has been selected.

Methods and systems according to the present disclosure can be applied to all kinds of vehicles, including land vehicles, air vehicles and sea vehicles.

**Claims**

1. Method of determining a heading angle of a mobile body, the method comprising:

   determining an initial position of the mobile body,
   defining a plurality of different initial heading angles and a plurality of instances of the mobile body, and associating each of the plurality of instances with one of the plurality of initial heading angles and with the initial position,
   while moving the mobile body, collecting inertial navigation data associated with the mobile body and updating a position of each of the plurality of instances based on the inertial navigation data,
   performing an absolute position measurement to determine an absolute position of the mobile body,
   comparing the absolute position with the position of each of the plurality of instances to find a best-fit instance of the plurality of instances that best fits the absolute position, and
   determining the heading angle of the mobile body based on a heading angle associated with the best-fit instance.

2. Method of claim 1, wherein determining the initial position comprises determining an initial roll angle and an initial pitch angle.

3. Method of claim 1 or 2, wherein updating the position of each of the plurality of instances comprises updating a respective heading angle, and optionally a respective roll angle and a respective pitch angle, based on the inertial navigation data.

4. Method of any one of the preceding claims wherein the inertial navigation data consists of data representative of linear acceleration and/or angular rate in respect of at least one degree of freedom of the mobile body, and wherein the position of each of the plurality of instances is updated based exclusively on the collected inertial navigation data, preferably the inertial navigation data is collected from an inertial navigation system coupled to the mobile body.

5. Method of any one of the preceding claims, wherein collecting the inertial navigation data associated with the mobile body and updating the position of each of the plurality of instances based on the inertial navigation data is performed at a first sampling rate and wherein performing the absolute position measurement is performed at a second sampling rate lower than the first sampling rate.

6. Method of any one of the preceding claims, wherein collecting the inertial navigation data associated with the mobile body, updating the position of each of the plurality of instances based on the inertial navigation data and performing the absolute position measurement are performed multiple times within an alignment period, preferably wherein comparing the absolute position with the position of each of the plurality of instances is performed at or after an end of the alignment period.

7. Method of any one of the preceding claims, wherein updating a position of each of the plurality of instances comprises performing open-loop strapdown navigation to determine the position of each of the plurality of instances.

8. Method of any one of the preceding claims, wherein updating a position of each of the plurality of instances comprises propagating a single covariance matrix in respect of all of the plurality of instances, wherein the single covariance matrix consists of variances representative of the heading angle and optionally the roll angle and the pitch angle .

9. Method of any one of the preceding claims, wherein performing the absolute position measurement comprises collecting GNSS position data of the mobile body.

10. Method of performing navigation of a mobile body, the method comprising:

carrying out the method of any one of the preceding claims to determine the heading angle and the position of the mobile body, optionally a roll angle and a pitch angle,
initializing a navigation algorithm with at least the heading angle and the position of the mobile body,
performing a motion trajectory of the mobile body and further collecting inertial navigation data associated with the mobile body and further performing absolute position measurement to determine a further absolute position of the mobile body and feeding the further collected inertial navigation data and the further absolute position to the navigation algorithm.

11. A navigation system (20), comprising:

an inertial navigation module (11),
an absolute position measurement module (12), and
a processing module (13) coupled to the inertial navigation module and to the absolute position measurement module,
wherein the processing module is configured to carry out the method of any one of the preceding claims.

12. The navigation system of claim 11 wherein the processing module (13) is configured to determine a navigational position by fusion of first data collected by the inertial navigation module (11) and second data collected by the absolute position measurement module (12).

13. The navigation system of claim 11 or 12, wherein the absolute position measurement module (12) comprises a GNSS receiver configured to determine an absolute position.

14. The navigation system of claim 13, comprising a single GNSS antenna.

15. A mobile body (10), preferably a vehicle, comprising the navigation system of any one of the claims 11 to 14.

FIG 1

30

$x_{b,0}, y_{b,0}, z_{b,0}$
$\theta_{b,0}, \phi_{b,0}$ ──── 31

$\psi_{j,0}, 1 \leq j \leq n$ ──── 32

330

| $1 < k\,Dt < T_a$ | $s_{j,k+1} = f(s_{j,k}, a_k, \omega_k)$ | | $x_{b,ti}, y_{b,ti}, z_{b,ti}$ |

33     34     340

35

36

FIG 2

40

41

$X_b$

$\psi$

10

42

$Z_b$

$Y_b$

$x_{b,0}, y_{b,0}, z_{b,0}$

FIG 3

$X_b$

10

$x_{b,ti}, y_{b,ti}, z_{b,ti}$

$Z_b$

40

$Y_b$

54

41

$x_{b,0}, y_{b,0}, z_{b,0}$

51

55

53

52

FIG 4

Europäisches
Patentamt

European
Patent Office

Office européen
des brevets

## EUROPEAN SEARCH REPORT

Application Number

EP 22 19 4711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H07 218277 A (ZANABUI INFORMATICS KK) 18 August 1995 (1995-08-18) * paragraphs [0008], [0009], [0011], [0012], [0014], [0015], [0018], [0027] * ----- | 1-15 | INV. G01C21/16 G01C21/30 G01S19/38 G01S19/47 G01C25/00 |
| A | WO 2021/208190 A1 (SHANGHAI HUACE NAVIGATION TECH LTD [CN]) 21 October 2021 (2021-10-21) * paragraphs [0039], [0040], [0051], [0090], [0091], [0108] * ----- | 2,5,7,8, 12 | |

TECHNICAL FIELDS
SEARCHED      (IPC)

G01C
G01S

The present search report has been drawn up for all claims

| Place of search | Date of completion of the search | Examiner |
|---|---|---|
| The Hague | 15 March 2023 | Nikoli, Revekka |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 4711

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2023

| Patent document cited in search report | | Publication date | Patent family member(s) | | Publication date |
|---|---|---|---|---|---|
| JP H07218277 | A | 18-08-1995 | NONE | | |
| WO 2021208190 | A1 | 21-10-2021 | CN | 111412912 A | 14-07-2020 |
| | | | EP | 3916432 A1 | 01-12-2021 |
| | | | WO | 2021208190 A1 | 21-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GADE KENNETH.** The seven ways to find heading. *The Journal of Navigation,* 2016, vol. 69.5, 955-970
- **ROTHMAIER FABIAN et al.** Single GNSS antenna heading estimation. *Proceedings of the 32nd International Technical Meeting of the Satellite Division of The Institute of Navigation (ION GNSS+ 2019),* 2019